# FASCICULE DE BREVET EUROPEEN

(11) **EP 4 082 134 B1**
(45) Date de publication et mention de la délivrance du brevet: **14.08.2024**
(21) Numéro de dépôt: 20824292.5
(22) Date de dépôt: 18.12.2020
(51) Int. Cl.: H04B 10/40, G02B 6/42

(54) **MODULE ÉMETTEUR-RÉCEPTEUR OPTIQUE**
OPTISCHES EMITTER-EMPFÄNGER-MODUL
OPTICAL EMITTER-RECEIVER MODULE

(30) Priorité: 23.12.2019 FR 1915411
(43) Date de publication de la demande: 02.11.2022
(73) Titulaire: LATELEC, 31500 Toulouse (FR)
(72) Inventeur: BACOU, Alexandre, 82700 SAINT PORQUIER (FR); ZISSIS, Georges, 31500 TOULOUSE (FR); PAUC, Jérôme, 31400 TOULOUSE (FR)
(74) Mandataire: Ipside
(86) Numéro de dépôt international: PCT/EP2020/087112
(87) Numéro de publication internationale: WO 2021/130127

(56) Documents cités:
- EP-A1- 1 795 930
- EP-A2- 0 974 856
- EP-B1- 1 795 930
- WO-A1-02/075402
- WO-A1-03/010579
- US-A1- 2002 131 727
- US-A1- 2003 152 336
- US-A1- 2012 020 383
- US-B1- 6 406 196

## Description

### Domaine de l'invention

La présente invention concerne un module émetteur-récepteur optique.

L'invention peut notamment être utilisée pour les communications optiques ou encore pour la fourniture d'un éclairage.

L'invention trouve une application avantageuse dans le domaine aéronautique, notamment pour équiper un aéronef.

### Etat de la technique

Les modules émetteurs-récepteurs optiques sont usuellement désignés dans la littérature anglosaxone sous la dénomination « Transceiver », contraction de «TRANSmitter» (« émetteur ») et de « reCEIVER » (« récepteur ») et francisés en transcepteur. Les transcepteurs comportent classiquement une partie émettrice et une partie réceptrice. La partie émettrice comporte notamment une source lumineuse émettant un faisceau lumineux et un premier dispositif optique configuré pour assurer le couplage optique du faisceau lumineux dans une première fibre optique. La partie réceptrice comporte notamment un deuxième dispositif optique configuré pour assurer le couplage d'un faisceau reçu par une deuxième fibre optique sur un photodétecteur. Dans le domaine aéronautique en particulier, ces transcepteurs, utilisant deux fibres optiques, présentent certains inconvénients, notamment en termes de coûts, d'encombrement, d'installation et de gestion de la maintenance associée.

Pour pallier ces inconvénients, une solution consiste à coupler les faisceaux lumineux émis et reçus respectivement par la source lumineuse et le photodétecteur dans une seule et même fibre optique. Un dispositif optique commun à la source lumineuse et au photodétecteur permet le couplage et la séparation des faisceaux lumineux émis et ceux reçus circulant dans la fibre optique.

Il existe de nombreuses solutions pour réaliser un tel dispositif optique commun. On peut notamment utiliser une lame semi-réfléchissante pourvue d'un filtre dichroïque. Cependant, le couplage optique optimal n'est pas garanti, la source lumineuse et le photodétecteur étant éloignés de l'extrémité de la fibre optique et les faisceaux lumineux émis ou reçus traversent de nombreux composants optiques (lentilles, filtre...). De plus, la mise en oeuvre de cette solution implique, pour maintenir en position les divers composants optiques, de nombreuses parties mécaniques qui doivent être usinées avec une grande précision. D'autre part, le transcepteur obtenu est volumineux.

Il est possible de remplacer la lame semi-réfléchissante par un coupleur optique, un circulateur optique ou encore un multiplexeur/démultiplexeur en longueur d'onde. Les transcepteurs obtenus restent cependant volumineux. L'intégration d'un grand nombre de tels transcepteurs dans un environnement réduit n'est donc pas envisageable.

Les documents US 6 406 196, US 2003/152336, EP 1 795 930 et EP 0 974 856 divulguent des exemples de modules émetteurs-récepteurs optiques.

### Exposé de l'invention

La présente invention vise à remédier aux inconvénients précités.

A cet effet, il est proposé par la présente invention un module émetteur-récepteur optique qui permet de séparer les faisceaux lumineux émis et ceux reçus.

Le module émetteur-récepteur optique comporte une première source lumineuse, un premier photodétecteur et une fibre optique multimode en verre. La première source lumineuse est configurée pour émettre un premier faisceau d'émission à une première longueur d'onde. La fibre optique comporte un coeur, une gaine optique, un axe optique, et présente :
- une première surface d'extrémité, inclinée d'un angle de 45° par rapport à l'axe optique de la fibre optique, comportant un miroir,
- une première encoche, s'étendant depuis une surface extérieure de la gaine optique jusqu'au coeur de la fibre optique, et présentant une première face comportant un premier filtre dichroïque configuré pour réfléchir un faisceau lumineux de longueur d'onde égale à une deuxième longueur d'onde, distincte de la première longueur d'onde, dit premier faisceau de réception.

La première source lumineuse est agencée par rapport au miroir de telle sorte que le premier faisceau d'émission émis par ladite première source lumineuse traverse la gaine optique, est réfléchi par le miroir et est transmis dans la fibre optique.

Le premier photodétecteur et la première face de la première encoche sont positionnés l'un par rapport à l'autre de telle sorte que le premier faisceau de réception réfléchi par le premier filtre dichroïque traverse la gaine optique et se dirige vers le premier photodétecteur.

Le module émetteur-récepteur optique selon l'invention ne comporte avantageusement qu'une source lumineuse, un photodétecteur et une fibre optique pour d'une part de coupler un faisceau lumineux, dit premier faisceau d'émission, issu de la première source lumineuse dans la fibre optique et d'autre part de coupler un faisceau lumineux, dit premier faisceau de réception, provenant de ladite fibre sur le premier photodétecteur.

Au lieu de recourir à des composants optiques externes pour réaliser les couplages des différents faisceaux lumineux, premier faisceau d'émission et premier faisceau de réception, on utilise la fibre optique elle-même.

Cette configuration particulièrement simple ne nécessite ainsi pas de composants optiques supplémentaires, la configuration géométrique assurant la transmission et la réception du premier faisceau d'émission et du premier faisceau de réception.

La fibre optique est avantageusement positionnée au plus proche des composants optiques que sont la première source lumineuse et le premier photodétecteur et de garantir un couplage optique performant.

Une telle configuration permet de réaliser un module émetteur-récepteur optique selon l'invention peu volumineux et à bas coût. L'intégration d'un grand nombre de ces modules émetteur-récepteur optiques dans des environnements réduits est possible. Selon des modes de mise en oeuvre particuliers, le module émetteur-récepteur optique selon l'invention répond en outre aux caractéristiques suivantes, mises en oeuvre séparément ou en chacune de leurs combinaisons techniquement opérantes. Dans des modes de réalisation préférés de l'invention, la fibre optique comporte une deuxième encoche, s'étendant depuis une surface extérieure de la gaine optique jusqu'au coeur de la fibre optique, et présentant une première face comportant un deuxième filtre dichroïque configuré pour réfléchir un faisceau lumineux à une troisième longueur d'onde, distincte de la première longueur d'onde et de la deuxième longueur d'onde.

Dans des exemples de réalisation, le module émetteur récepteur optique comporte une deuxième source lumineuse configurée pour émettre un faisceau lumineux à une troisième longueur d'onde, dit deuxième faisceau d'émission. La deuxième source lumineuse et la première face de la deuxième encoche sont positionnées l'une par rapport à l'autre de telle sorte que le deuxième faisceau d'émission émis par la deuxième source lumineuse traverse la gaine optique, est réfléchi par le deuxième filtre dichroïque et est transmis dans la fibre optique.

De préférence, la première source lumineuse, le premier photodétecteur et la deuxième source lumineuse sont disposés dans un même plan. Un tel agencement permet de réduire davantage l'encombrement du module émetteur-récepteur optique. Dans d'autres exemples de réalisation, le module émetteur récepteur optique comporte un deuxième photodétecteur configuré pour détecter un faisceau lumineux à une troisième longueur d'onde, le deuxième photodétecteur et la première face de la deuxième encoche sont positionnés l'un par rapport à l'autre de telle sorte que le faisceau lumineux à la troisième longueur d'onde réfléchi par le deuxième filtre dichroïque traverse la gaine optique et se dirige vers le deuxième photodétecteur. De préférence, la première source lumineuse, le premier photodétecteur et le deuxième photodétecteur sont disposés dans un même plan. Un tel agencement permet de réduire davantage l'encombrement du module émetteur-récepteur optique. Dans des variantes de réalisation, la fibre optique peut présenter une coupure la séparant en deux tronçons contigus, une des faces en vis-à-vis de la coupure comportant un filtre dichroïque configuré pour réfléchir un faisceau lumineux à une longueur d'onde prédéfinie. Cette coupure peut remplacer une des encoches décrites précédemment.

Dans des modes de réalisation, la première encoche ou la deuxième encoche, ou la coupure est réalisée par un micro-usinage de la fibre optique.

La fibre optique utilisée étant une fibre optique multimode, son coeur est suffisamment large pour y permettre la réalisation d'un micro-usinage.

Le micro-usinage de la fibre optique peut être réalisé, par exemple à l'aide d'un laser de puissance impulsionnel.

### Présentation des figures

L'invention sera mieux comprise à la lecture de la description suivante, donnée à titre d'exemple nullement limitatif, et faite en se référant aux figures qui représentent :
La figure 1 est une représentation schématique, en coupe, d'un transcepteur optique selon un premier exemple de réalisation de l'invention,
La figure 2 est une représentation schématique, en coupe, d'un transcepteur optique selon une variante de réalisation de l'invention,
La figure 3 est une représentation schématique, en coupe, d'un transcepteur optique selon une autre variante de réalisation de l'invention,
La figure 4 est une représentation schématique, en coupe, d'un transcepteur optique selon une autre variante de réalisation de l'invention
La figure 5 est une représentation schématique, en coupe, d'un transcepteur optique selon une autre variante de réalisation de l'invention,
La figure 6 est une représentation schématique, en coupe, d'un transcepteur optique selon une autre variante de réalisation de l'invention
La figure 7 est une représentation schématique, en coupe, d'un transcepteur optique selon une autre variante de réalisation de l'invention,
La figure 8 est une représentation schématique, en coupe, d'un transcepteur optique selon une autre variante de réalisation de l'invention.

### Description détaillée d'un mode de réalisation de l'invention

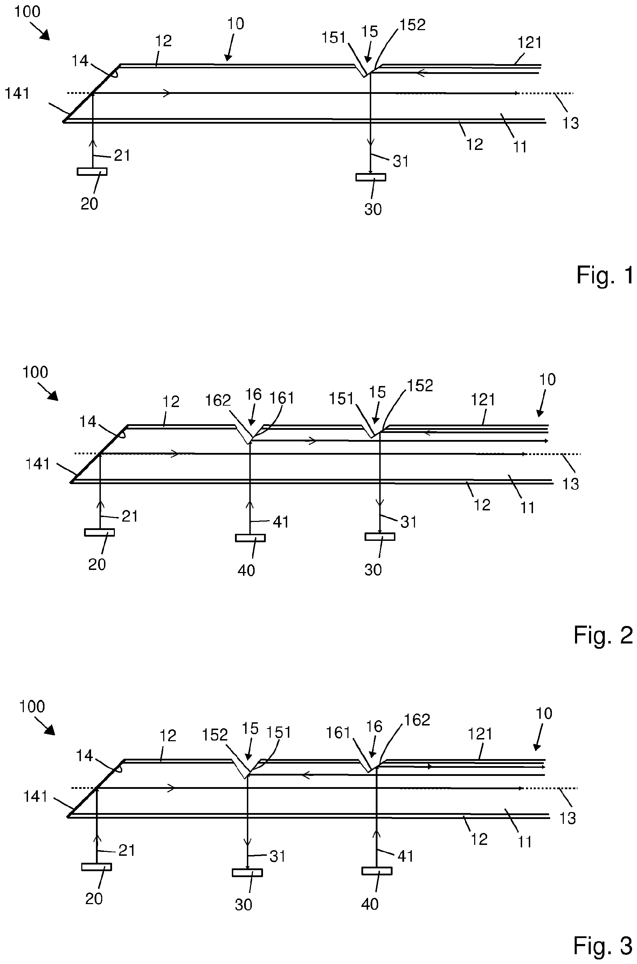

La figure 1 illustre d'une manière très schématique, et en coupe, un premier exemple d'un module émetteur-récepteur optique selon l'invention.

Dans la suite de la description, on dénommera un module émetteur-récepteur optique, transcepteur optique 100.

Le transcepteur optique 100 comporte une fibre optique 10, une première source lumineuse 20 et un premier photodétecteur 30.

La figure 1 représente une vue en coupe longitudinale d'une partie de la fibre optique 10.

La fibre optique 10 comporte, de manière classique, un coeur 11 et une gaine optique 12. La gaine optique 12 est en contact avec le coeur 11 et entoure celui-ci. La gaine optique 12 présente un indice de réfraction inférieur à un indice de réfraction du coeur 11.

La fibre optique 10 utilisée est préférentiellement une fibre optique multimode. Elle présente ainsi un coeur 11 de grand diamètre. Elle est préférentiellement constituée de verre, à base de silice.

La fibre optique 10 présente un axe optique 13 qui suit le centre du coeur 11 de la fibre optique 10.

La fibre optique 10 comporte une première surface d'extrémité 14. La première surface d'extrémité 14 est inclinée d'un angle par rapport à l'axe optique 13 de la fibre optique 10. Avantageusement, l'angle de la première surface d'extrémité 14 est sensiblement égal à 45°.

L'inclinaison de la première surface d'extrémité 14 de la fibre optique 10 peut par exemple être réalisée par polissage ou clivage.

La première surface d'extrémité 14 comporte un miroir 141. Le miroir 141 est agencé pour réfléchir des faisceaux lumineux se propageant dans la fibre optique 10.

Selon l'invention, le miroir 141 est destiné à être couplé optiquement avec la première source lumineuse 20.

La première source lumineuse 20 est configurée pour émettre un faisceau lumineux, dit premier faisceau d'émission.

La première source lumineuse 20 est préférentiellement une source monochromatique. Le premier faisceau d'émission est par exemple émis à une longueur d'onde λ₁.

Dans un exemple préféré de réalisation, le premier faisceau d'émission en sortie de la première source lumineuse 20 est un faisceau divergent et se présente sous la forme d'un cône de diffusion.

Dans une variante de réalisation, une lentille peut être disposée en sortie de la première source lumineuse 20, pour collimater le premier faisceau d'émission.

De manière générale, toute source lumineuse peut être utilisée pour la première source lumineuse 20, telle que par exemple des diodes électroluminescentes (connues sous l'acronyme DEL) ou des sources laser, telles que les diodes laser ou les diodes laser à cavité verticale émettant par la surface, communément connues sous l'acronyme VCSEL (pour l'anglais « vertical-cavity surface-emitting laser »). Toutefois, on privilégiera avantageusement l'utilisation des sources lumineuses émettant par la surface, telles que les DEL ou les VCSEL.

La première source lumineuse 20 est destinée à être positionnée en regard de la gaine optique 12 de la fibre optique 10. La première source lumineuse 20 est agencée par rapport au miroir 141 de telle sorte que le premier faisceau d'émission, après avoir traversé la gaine optique 12, se dirige vers le miroir 141 pour y être réfléchi et se propager ensuite dans le coeur 11 de la fibre optique 10.

Sur la figure 1, par souci de clarté, seul un rayon 21 du premier faisceau d'émission est représenté, en l'occurrence celui situé sur un axe central du premier faisceau d'émission. Une flèche indique le sens de propagation de ce rayon 21.

La première source lumineuse 20 est agencée par exemple, et comme illustré sur la figure 1, de sorte que ledit rayon situé sur l'axe central du premier faisceau d'émission présente, au niveau du miroir 141, un angle sensiblement de 90° avec l'axe optique 13 de la fibre optique 10. Ainsi le rayon 21 du premier faisceau d'émission, après réflexion sur le miroir 141, est transmis dans la fibre optique 10 sensiblement dans l'axe optique 13 de ladite fibre optique.

La première source lumineuse 20 est préférentiellement positionnée par rapport à la fibre optique 10 de sorte que l'ensemble des rayons formant le premier faisceau d'émission, qu'il soit divergent ou collimaté, est réfléchi en totalité par le miroir 141. Un tel agencement de la première source lumineuse 20 vis-à-vis de la fibre optique 10 permet la transmission du premier faisceau d'émission dans la fibre optique 10 avec un couplage optimal.

La fibre optique 10 comporte en outre une première encoche 15, préférentiellement réalisée à distance de la première surface d'extrémité 14.

La première encoche 15 est préférentiellement une encoche transversale, c'est-à-dire qu'elle est réalisée dans une direction sensiblement perpendiculaire à la direction longitudinale de la fibre optique 10.

La première encoche 15 s'étend depuis une surface extérieure 121 de la gaine optique 12 jusqu'au coeur 11 de la fibre optique 10.

Dans l'exemple préféré mais non limitatif de la figure 1, la première encoche 15 présente une section droite en forme de V.

La première encoche 15 comporte une première face 151 inclinée par rapport à l'axe optique 13 de la fibre optique 10.

La première face 151 de la première encoche 15 comporte un filtre dichroïque, dit premier filtre dichroïque 152. Ce premier filtre dichroïque 152 est avantageusement configuré pour réfléchir un faisceau lumineux de longueur d'onde λ₂, dit premier faisceau de réception, en provenance de la fibre optique 10, vers le photodétecteur, comme illustré sur la figure 1. Par souci de clarté, seule la propagation d'un rayon arbitraire 31 du premier faisceau de réception est représentée sur cette figure. Une flèche indique le sens de propagation de ce rayon 31.

La longueur d'onde λ₂ du premier faisceau de réception est distincte de la longueur d'onde λ₁ du premier faisceau d'émission.

Le premier filtre dichroïque 152 de la première encoche 15 est également avantageusement configuré pour laisser passer le premier faisceau d'émission, de longueur d'onde λ₁.

La première face 151 de la première encoche 15 est couplée optiquement avec le premier photodétecteur 30.

Le premier photodétecteur 30 est positionné en regard de la gaine optique 12 de la fibre optique 10.

Le premier photodétecteur 30 est disposé vis à vis de la fibre optique 10 sensiblement de manière diamétralement opposée à la première encoche 15 réalisée dans la fibre optique 10.

Le premier photodétecteur 30 est avantageusement configuré pour détecter le premier faisceau de réception réfléchi par le premier filtre dichroïque 152.

La première face 151 de la première encoche 15 est inclinée, par rapport à l'axe optique 13 de la fibre optique 10, de telle sorte que le premier faisceau de réception provenant de la fibre optique 10 et réfléchi par le premier filtre dichroïque 152 est dirigé à l'extérieur de la fibre optique 10, vers le premier photodétecteur 30 qui lui est couplé. Le premier photodétecteur 30 et la première face 151 de la première encoche 15 sont positionnés l'un par rapport à l'autre de sorte que le premier faisceau de réception, réfléchi par le premier filtre dichroïque 152, traverse la gaine optique 12 et se dirige vers le premier photodétecteur 30.

Le premier photodétecteur 30 est préférentiellement positionné par rapport à la fibre optique 10 de sorte que l'ensemble des rayons formant le premier faisceau de réception est reçu en totalité, ou en quasi-totalité, par le photodétecteur.

Un tel agencement du premier photodétecteur 30 vis-à-vis de la fibre optique 10 et de la première face 151 de la première encoche 15 permet la transmission du premier faisceau de réception dans le premier photodétecteur 30 avec un couplage optimal. Dans l'exemple non limitatif de la figure 1, la première face 151 de la première encoche 15 présente une inclinaison dans le même sens que le miroir 141 de la première surface d'extrémité 14. Ainsi, la première source lumineuse 20 et le premier photodétecteur 30 sont disposés du même côté de la fibre optique 10. Un tel agencement contribue à réduire l'encombrement final du transcepteur.

Dans un autre exemple de réalisation (non représenté), la première face 151 de la première encoche 15 présente une inclinaison de sens opposé au miroir 141 de la première surface d'extrémité 14. Ainsi, la première source lumineuse 20 et le premier photodétecteur 30 sont disposés de manière diamétralement opposée par rapport à la fibre optique 10.

Dans une variante de réalisation de l'invention, illustrée par les figures 2 à 5, la fibre optique 10 comporte une deuxième encoche 16. La deuxième encoche 16 est également préférentiellement réalisée à distance de la première surface d'extrémité 14.

Tout comme la première encoche 15, la deuxième encoche 16 est préférentiellement une encoche transversale. La deuxième encoche 16 s'étend également préférentiellement depuis la surface extérieure 121 de la gaine optique 12 jusqu'au coeur 11 de la fibre optique 10.

Dans l'exemple non limitatif de la figure 2, la deuxième encoche 16 présente une section droite en forme de V.

La deuxième encoche 16 comporte une première face 161 inclinée par rapport à l'axe optique 13 de la fibre optique 10.

La première face 161 de la deuxième encoche 16 comporte un filtre dichroïque, dit deuxième filtre dichroïque 162. Ce deuxième filtre dichroïque 162 est avantageusement configuré pour réfléchir un faisceau lumineux de longueur d'onde λ₃. La longueur d'onde égale à λ₃, est distincte des longueurs d'onde λ₁ du premier faisceau d'émission et λ₂ du premier faisceau de réception.

Dans une première version de réalisation de cette variante, illustrée par les figures 2 et 3, la première face 161 de la deuxième encoche 16 est destinée à être couplée optiquement avec une deuxième source lumineuse 40.

La deuxième source lumineuse 40 est préférentiellement une source monochromatique. Elle est configurée pour émettre un faisceau lumineux, dit deuxième faisceau d'émission, de longueur d'onde λ₃.

Dans un exemple préféré de réalisation, le deuxième faisceau d'émission en sortie de la deuxième source lumineuse 40 est un faisceau divergent et se présente sous la forme d'un cône de diffusion.

Dans une variante de réalisation, une lentille peut être disposée en sortie de la deuxième source lumineuse 40, pour collimater le deuxième faisceau d'émission. De manière générale, toute source lumineuse peut être utilisée pour la deuxième source lumineuse, telle que par exemple les DEL, les diodes laser ou les VCSEL. Toutefois, comme pour la première source lumineuse 20, on privilégiera avantageusement l'utilisation de sources lumineuses émettant par la surface.

La deuxième source lumineuse 40 est destinée à être positionnée en regard de la gaine optique 12 de la fibre optique 10. La deuxième source lumineuse 40 est disposée vis à vis de la fibre optique 10 sensiblement de manière diamétralement opposée à la deuxième encoche 16 réalisée dans la fibre optique 10.

La première face 161 de la deuxième encoche 16 est inclinée par rapport à l'axe optique 13 de la fibre optique 10 de telle sorte que le deuxième faisceau d'émission, après avoir traversé la gaine optique 12, se dirige vers la première face 161 de la deuxième encoche 16 pour y être réfléchi par le premier filtre dichroïque 152 et se propager dans le coeur 11 de la fibre optique 10.

Sur les figures 2 et 3, toujours par souci de clarté, seul un rayon 41 du deuxième faisceau d'émission est représenté, en l'occurrence celui situé sur un axe central du deuxième faisceau d'émission. Une flèche indique le sens de propagation de ce rayon 41.

La deuxième source lumineuse 40 est préférentiellement positionnée par rapport à la fibre optique 10 de sorte que l'ensemble des rayons formant le deuxième faisceau d'émission, qu'il soit divergent ou collimaté, est réfléchi en partiellement ou en totalité par le deuxième filtre dichroïque 162.

Un tel agencement de la deuxième source lumineuse 40 vis-à-vis de la fibre optique 10 permet la transmission du deuxième faisceau d'émission dans la fibre optique 10 avec un couplage optimal.

Dans une forme de réalisation, illustrée sur la figure 2, la deuxième encoche 16 est située entre la première surface d'extrémité 14 et la première encoche 15. Dans une telle configuration, le premier filtre dichroïque 152 de la première encoche 15 est préférentiellement configuré pour laisser passer les rayons issus du premier faisceau d'émission, de longueur d'onde λ₁, et les rayons issus du deuxième faisceau d'émission, de longueur d'onde λ₃. Le deuxième filtre dichroïque 162 de la deuxième encoche 16 est préférentiellement configuré pour laisser passer les rayons issus du premier faisceau d'émission, de longueur d'onde λ₁.

Dans une autre forme de réalisation, illustrée sur la figure 3, la première encoche 15 est située entre la première surface d'extrémité 14 et la deuxième encoche 16. Dans une telle configuration, le premier filtre dichroïque 152 de la première encoche 15 est préférentiellement configuré pour laisser passer les rayons issus du premier faisceau d'émission, de longueur d'onde λ₁. Le deuxième filtre dichroïque 162 de la deuxième encoche 16 est préférentiellement configuré pour laisser passer les rayons issus du premier faisceau d'émission, de longueur d'onde λ₁, et les rayons issus du premier faisceau de réception, de longueur d'onde λ₂.

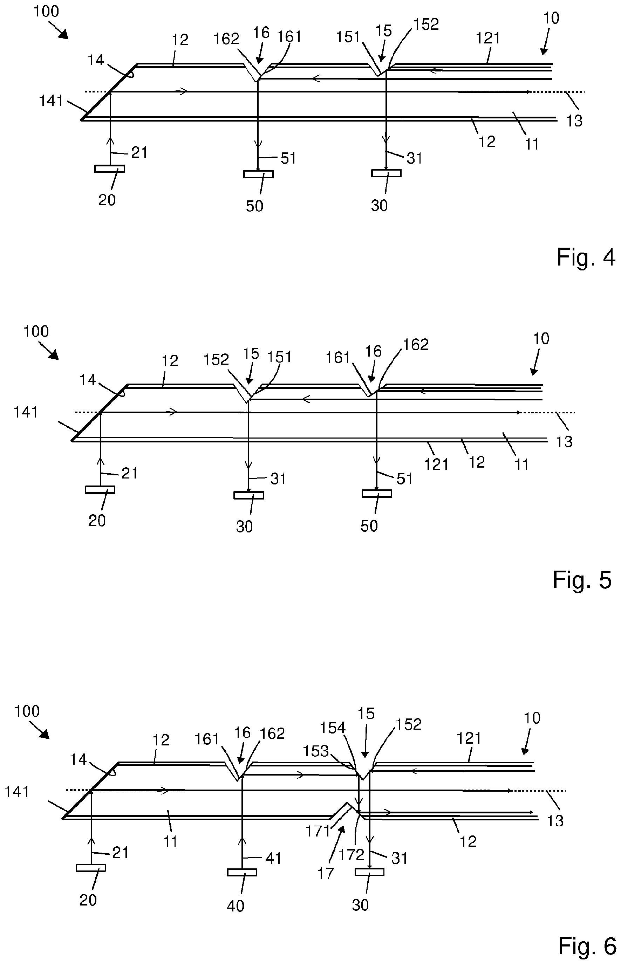

Dans une deuxième version de réalisation de la variante, illustrée par les figures 4 et 5, la première face 161 de la deuxième encoche 16 est destinée à être couplée optiquement avec un deuxième photodétecteur 50.

Le deuxième photodétecteur 50 est positionné en regard de la gaine optique 12 de la fibre optique 10.

Le deuxième photodétecteur 50 est disposé vis à vis de la fibre optique 10 sensiblement de manière diamétralement opposée à la deuxième encoche 16 réalisée dans la fibre optique 10.

Le deuxième photodétecteur 50 est avantageusement configuré pour détecter un deuxième faisceau de réception, de longueur d'onde λ₃.

La première face 161 de la deuxième encoche 16 est inclinée, par rapport à l'axe optique 13 de la fibre optique 10, de telle sorte que le deuxième faisceau de réception provenant de la fibre optique 10 et réfléchi par le deuxième filtre dichroïque 162 est dirigé à l'extérieur de la fibre optique 10, vers le deuxième photodétecteur 50 qui lui est couplé.

Le deuxième photodétecteur 50 et la première face 161 de la deuxième encoche 16 sont positionnés l'un par rapport à l'autre de sorte que le deuxième faisceau de réception, réfléchi par le deuxième filtre dichroïque 162, traverse la gaine optique 12 et se dirige vers le deuxième photodétecteur 50.

Sur les figures 4 et 5, seul un rayon arbitraire 51 du deuxième faisceau de réception est représenté. Une flèche indique le sens de propagation de ce rayon 51.

Le deuxième photodétecteur 50 est préférentiellement positionné par rapport à la fibre optique 10 de sorte que l'ensemble des rayons formant le deuxième faisceau de réception est reçu en totalité, ou en quasi-totalité, par le deuxième photodétecteur 50. Un tel agencement du deuxième photodétecteur 50 vis-à-vis de la fibre optique 10 et de la première face 161 de la deuxième encoche 16 permet la transmission du deuxième faisceau de réception dans le deuxième photodétecteur 50 avec un couplage optimal.

Dans une forme de réalisation, illustrée sur la figure 4, la deuxième encoche 16 est située entre la première surface d'extrémité 14 et la première encoche 15. Dans une telle configuration, le premier filtre dichroïque 152 de la première encoche 15 est préférentiellement configuré pour laisser passer les rayons issus du premier faisceau d'émission, de longueur d'onde λ₁, et les rayons issus du deuxième faisceau de réception, de longueur d'onde λ₃. Le deuxième filtre dichroïque 162 de la deuxième encoche 16 est préférentiellement configuré pour laisser passer les rayons issus du premier faisceau d'émission, de longueur d'onde λ₁.

Dans une autre forme de réalisation, illustré sur la figure 5, la première encoche 15 est située entre la première surface d'extrémité 14 et la deuxième encoche 16. Dans une telle configuration, le premier filtre dichroïque 152 de la première encoche 15 est préférentiellement configuré pour laisser passer les rayons issus du premier faisceau d'émission, de longueur d'onde λ₁. Le deuxième filtre dichroïque 162 de la deuxième encoche 16 est préférentiellement configuré pour laisser passer les rayons issus du premier faisceau d'émission, de longueur d'onde λ₁, et les rayons issus du premier faisceau de réception, de longueur d'onde λ₂.

Quelle que soit la version réalisée, la première face 151 de la première encoche 15 et la première face 161 de la deuxième encoche 16 sont préférentiellement réalisées sensiblement d'un même côté de la fibre optique 10, et présentent une inclinaison dans le même sens que le miroir 141 de la première surface d'extrémité 14. Ainsi, la première source lumineuse 20, le premier photodétecteur 30 et la deuxième source lumineuse 40, ou le deuxième photodétecteur 50, sont disposés dans un même plan, et sensiblement alignés. Un tel agencement contribue à réduire l'encombrement final du transcepteur.

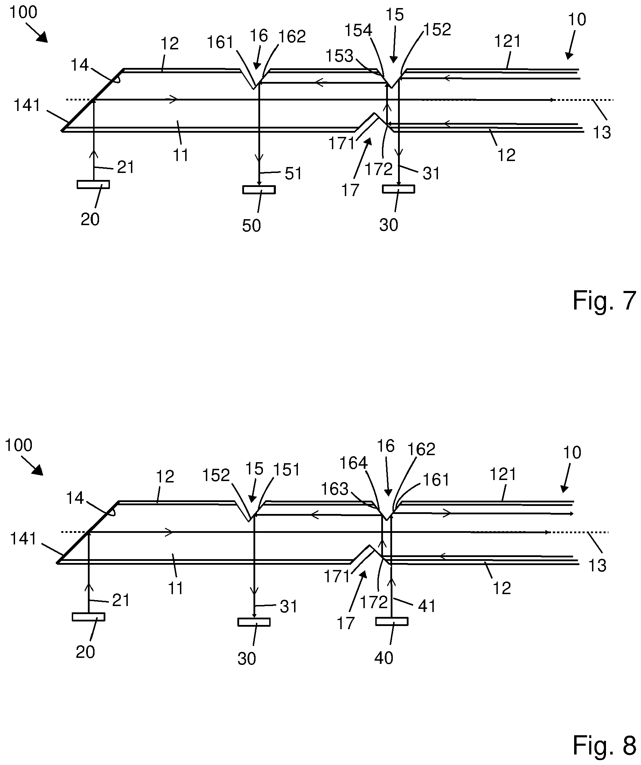

Dans une autre variante de réalisation du transcepteur, illustrée sur les figures 6 et 7, la fibre optique comporte une troisième encoche 17. La troisième encoche 17 est également préférentiellement réalisée à distance de la première surface d'extrémité 14.

Tout comme la première encoche 15 ou la deuxième encoche 16, la troisième encoche 17 est préférentiellement une encoche transversale. La troisième encoche 17 s'étend également préférentiellement depuis la surface extérieure 121 de la gaine optique 12 jusqu'au coeur 11 de la fibre optique 10.

Dans l'exemple non limitatif de la figure 6, la troisième encoche 17 présente une section droite en forme de V.

La troisième encoche 17 comporte une première face 171 inclinée par rapport à l'axe optique 13 de la fibre optique 10.

La première face 171 de la troisième encoche 17 comporte un filtre dichroïque, dit troisième filtre dichroïque 172. Ce troisième filtre dichroïque 172 est avantageusement configuré pour réfléchir un faisceau lumineux de longueur d'onde λ₃, comme pour le deuxième filtre dichroïque 162.

Dans une forme de réalisation, illustrée sur les figures 6 et 7, la deuxième encoche 16 est située entre la première surface d'extrémité 14 et la première encoche 15.

La première encoche 15 comporte une deuxième face 153 inclinée par rapport à l'axe optique 13 de la fibre optique 10.

La deuxième face 153 de la première encoche 15 comporte un filtre dichroïque, dit quatrième filtre dichroïque 154. Ce quatrième filtre dichroïque 154 est avantageusement configuré pour réfléchir un faisceau lumineux de longueur d'onde λ₃, comme pour le deuxième filtre dichroïque 162 et le troisième filtre dichroïque 172. La première face 171 de la troisième encoche 17 est sensiblement agencée de manière diamétralement opposée à la deuxième face 153 de la première encoche 15. La première face 161 de la deuxième encoche 16, la deuxième face 153 de la première encoche 15 et la première face 171 de la troisième encoche 17 sont agencées les unes par rapport aux autres de telle sorte que :
- lorsque la première face 161 de la deuxième encoche 16 est destinée à être couplée optiquement avec la deuxième source lumineuse 40, le deuxième faisceau d'émission, après avoir traversé la gaine optique 12, se dirige vers la première face 161 de la deuxième encoche 16 pour y être réfléchi par le premier filtre dichroïque 152, puis réfléchi par le quatrième filtre dichroïque 154, puis réfléchi par le troisième filtre dichroïque 172 et se propager dans le coeur 11 de la fibre optique 10 (figure 6),
- lorsque la première face 161 de la deuxième encoche 16 est destinée à être couplée optiquement avec le deuxième photodétecteur 50, une partie du deuxième faisceau de réception est réfléchi par le troisième filtre dichroïque 172, puis réfléchi par le quatrième filtre dichroïque 154, puis réfléchi par le deuxième filtre dichroïque 162, traverse la gaine optique 12 et se dirige vers le deuxième photodétecteur 50 (figure 7).

Dans une forme de réalisation, illustrée sur la figure 8, la première encoche 15 est située entre la première surface d'extrémité 14 et la deuxième encoche 16.

La deuxième encoche 16 comporte une deuxième face 163 inclinée par rapport à l'axe optique 13 de la fibre optique 10.

La deuxième face 163 de la deuxième encoche 16 comporte un filtre dichroïque, dit cinquième filtre dichroïque 164. Ce cinquième filtre dichroïque 164 est avantageusement configuré pour réfléchir un faisceau lumineux de longueur d'onde λ₃, comme pour le deuxième filtre dichroïque 162 et le troisième filtre dichroïque 172. La première face 171 de la troisième encoche 17 est sensiblement agencée de manière diamétralement opposée à la deuxième face 163 de la deuxième encoche 16. La première face 151 de la première encoche 15, la deuxième face 163 de la deuxième encoche 16 et la première face 171 de la troisième encoche 17 sont agencées les unes par rapport aux autres de telle sorte qu'une partie du premier faisceau de réception est réfléchi puis par le troisième filtre dichroïque 172, puis réfléchi par le cinquième filtre dichroïque 164, puis réfléchi par le premier filtre dichroïque 152, traverse la gaine optique 12 et se dirige vers le premier photodétecteur 30.

Dans une autre variante (non illustrée) de réalisation du transcepteur, la fibre optique 10 peut présenter en lieu et place de la première encoche 15 et/ou de la deuxième encoche 16, une coupure séparant la fibre optique 10 en deux tronçons contigus. Au niveau de la coupure remplaçant la première encoche 15, le premier filtre dichroïque 152 est appliqué sur une des deux faces en vis-à-vis délimitant la coupure. La face sur laquelle est appliquée le premier filtre dichroïque 152 est inclinée, par rapport à l'axe optique 13 de la fibre optique 10, de manière identique à la première face 151 de la première encoche 15, de telle sorte que le premier faisceau de réception provenant de la fibre optique 10 et réfléchi par le premier filtre dichroïque 152 est dirigé à l'extérieur de la fibre optique 10, vers le premier photodétecteur 30 qui lui est couplé. Au niveau de la coupure remplaçant la deuxième encoche 16, le deuxième filtre dichroïque 162 est appliqué sur une des deux faces en vis-à-vis délimitant la coupure. La face sur laquelle est appliquée le premier filtre dichroïque 152 est inclinée, par rapport à l'axe optique 13 de la fibre optique 10, de manière identique à la première face 161 de la deuxième encoche 16.

Le nombre de sources lumineuses, de photodétecteurs et d'encoches et/ou coupures dans la fibre optique 10 n'est pas limité aux exemples précédemment décrits. Il est possible sans se départir du cadre de l'invention, d'ajouter autant de sources lumineuses, de photodétecteurs et d'encoches et/ou coupures associées que nécessaire, selon l'application désirée.

Un exemple d'assemblage d'une fibre optique 10, d'une première source lumineuse 20 et d'un premier photodétecteur 30, en vue de réaliser un transcepteur optique compact, est à présent décrit, à titre non limitatif.

La fibre optique 10 est préparée. La première encoche 15, notamment sa forme et sa profondeur, et le polissage de la première surface d'extrémité 14 sont réalisés par exemple par des techniques classiques de micro-usinage.

Un premier dépôt, préférentiellement d'or, est réalisé sur la première surface d'extrémité 14 en vue de former le miroir 141.

Un traitement de surface est réalisé sur la première face 151 de la première encoche 15 en vue de former le premier filtre dichroïque 152 approprié.

Une fois préparée, la fibre optique 10 est maintenue en place dans une rainure, par exemple en forme de V, pratiquée dans un premier substrat. La fibre optique 10 est maintenue en place par exemple par collage. Le premier substrat est préférentiellement un support en céramique ou en silicium.

Sur un deuxième substrat, sont reportés les composants optiques, à savoir la première source lumineuse 20 et le premier photodétecteur 30. La première source lumineuse 20 est préférentiellement une source émettant par la surface. Le deuxième substrat est préférentiellement un support en céramique ou en silicium. Le deuxième substrat peut servir avantageusement de support aux circuits électroniques d'alimentation et de commande des composants optiques. Les composants optiques sont de préférence collés au deuxième substrat.

Dans un exemple de réalisation, la colle est une colle conductrice thixotropique. Une telle colle présente une bonne conductivité thermique et électrique.

Les composants optiques sont disposés sur le deuxième substrat de telle façon que, lorsque le premier substrat vient se positionner en vis-à-vis du deuxième substrat :
- la première source lumineuse 20 est disposée en regard de la gaine de la fibre optique 10 et agencée en vis-à-vis de la première surface d'extrémité 14 de la fibre optique 10, de sorte que le premier faisceau d'émission est dirigé vers le premier miroir 141, et
- le premier photodétecteur 30 est disposé en regard de la gaine de la fibre optique 10, diamétralement opposé à la première encoche 15, de sorte que le premier faisceau de réception est réfléchi par le premier filtre dichroïque 152 en direction du premier photodétecteur 30.

Des cales d'épaisseur peuvent être interposées entre le premier substrat et le deuxième substrat, de part et d'autre de la fibre optique 10 et des composants optiques, pour garantir un espacement entre lesdits composants optiques et ladite fibre optique 10.

Dans un exemple de réalisation, les cales d'épaisseur sont par exemple réalisés en matériaux polymères non conducteurs.

Le premier substrat et le deuxième substrat sont maintenus en vis-à-vis l'un de l'autre par exemple par une colle, de préférence de même indice de réfraction que celui de la gaine optique 12.

Avec un tel transducteur optique, la fibre optique 10 est au plus près des composants optiques, les couplages optiques sont ainsi optimaux.

Dans une application préférée du transcepteur optique 100, ledit transcepteur optique est disposé dans un aéronef et peut être associé à un équipement tel qu'un équipement connu sous l'acronyme PSU (« Passenger Service Unit », en terminologie anglaise), permettant notamment à un passager de déclencher des appels vers le personnel navigant commercial ou pour allumer/éteindre une liseuse.

Le transcepteur optique 100 peut alors être avantageusement destiné d'une part à la transmission de données, via la technologie Li-Fi (acronyme de Light Fidelity), et à la fourniture d'un éclairage ambiant. La transmission de données, par la technologie Li-Fi, s'entend autant dans le sens d'un flux descendant (vers le passager) que dans le sens d'un flux montant (en provenance du passager).

La première source lumineuse 20 du transcepteur optique 100 est configurée pour émettre le premier faisceau d'émission à une longueur d'onde λ₁ située dans le domaine de l'infrarouge. Par domaine infrarouge, on entend la gamme des longueurs d'onde comprises entre 780 nm et 2µm.

La deuxième source lumineuse 40 du transcepteur optique 100 est configurée pour émettre le deuxième faisceau d'émission à une longueur d'onde λ₃ située par exemple dans le domaine du bleu. Par domaine du bleu, on entend la gamme des longueurs d'onde comprises entre 450 et 500nm.

Le premier photodétecteur 30 du transcepteur optique 100 est configuré pour détecter le premier faisceau de réception à une longueur d'onde λ₂ également située dans le domaine de l'infrarouge.

Un module optique, en sortie de la fibre optique 10 du transcepteur optique 100, peut permettre ensuite d'une part de diffuser le premier faisceau d'émission, destiné à la transmission des données vers le passager, et d'autre part de convertir le deuxième faisceau d'émission en un faisceau d'éclairage. Le module optique peut également permettre la transmission, dans la fibre optique 10 du transcepteur optique 100, du premier faisceau de réception contenant les données en provenance du passager. La description ci-avant illustre clairement que, par ses différentes caractéristiques et leurs avantages, la présente invention atteint les objectifs qu'elle s'était fixés. En particulier, elle propose un transcepteur optique à faible encombrement et à bas coût. Le transcepteur optique propose une configuration simple, qui ne nécessite pas de composants optiques supplémentaires autre que les sources lumineuses et photodétecteurs. L'usinage de la fibre optique et le positionnement des sources lumineuses et photodétecteurs vis-à-vis de la fibre optique assurent la transmission et la réception des faisceaux lumineux.

## Revendications

1. Module émetteur-récepteur optique (100) comportant une première source lumineuse (20), un premier photodétecteur (30) et une fibre optique (10) multimode en verre, la première source lumineuse (20) étant configurée pour émettre un premier faisceau d'émission à une première longueur d'onde (λ₁), la fibre optique (10) comportant un coeur (11), une gaine optique (12), un axe optique (13),
**caractérisé en ce que** la fibre optique présente :
- une première surface d'extrémité (14), inclinée d'un angle de 45° par rapport à l'axe optique de la fibre optique, comportant un miroir (141),
- une première encoche (15), s'étendant depuis une surface extérieure (121) de la gaine optique (12) jusqu'au coeur de la fibre optique, et présentant une première face (151) comportant un premier filtre dichroïque (152) configuré pour réfléchir un faisceau lumineux de longueur d'onde égale à une deuxième longueur d'onde (λ₂), distincte de la première longueur d'onde (λ₁), dit premier faisceau de réception,
**en ce que** la première source lumineuse (20) est agencée par rapport au miroir (141) de telle sorte que le premier faisceau d'émission émis par ladite première source lumineuse traverse la gaine optique (12), est réfléchi par le miroir (141) et est transmis dans la fibre optique (10),
et **en ce que** le premier photodétecteur (30) et la première face (151) de la première encoche (15) sont positionnés l'un par rapport à l'autre de telle sorte que le premier faisceau de réception réfléchi par le premier filtre dichroïque (152) traverse la gaine optique (12) et se dirige vers le premier photodétecteur.

2. Module émetteur-récepteur optique (100) selon la revendication 1 dans lequel la fibre optique (10) comporte une deuxième encoche (16), s'étendant depuis une surface extérieure (121) de la gaine optique (12) jusqu'au coeur (11) de la fibre optique, et présentant une première face (161) comportant un deuxième filtre dichroïque (162) configuré pour réfléchir un faisceau lumineux à une troisième longueur d'onde (λ₃), distincte de la première longueur d'onde (λ₁) et de la deuxième longueur d'onde (λ₂).

3. Module émetteur-récepteur optique (100) selon la revendication 2 comportant une deuxième source lumineuse (40) configurée pour émettre un faisceau lumineux à une troisième longueur d'onde (λ₃), dit deuxième faisceau d'émission, la deuxième source lumineuse (40) et la première face (161) de la deuxième encoche (16) sont positionnées l'une par rapport à l'autre de telle sorte le deuxième faisceau d'émission émis par la deuxième source lumineuse (40) traverse la gaine optique (12), est réfléchi par le deuxième filtre dichroïque (162) et est transmis dans la fibre optique (10).

4. Module émetteur-récepteur optique (100) selon la revendication 2 comportant un deuxième photodétecteur (50) configuré pour détecter un faisceau lumineux à une troisième longueur d'onde (λ₃), le deuxième photodétecteur (30) et la première face (161) de la deuxième encoche (16) sont positionnés l'un par rapport à l'autre de telle sorte le faisceau lumineux à la troisième longueur d'onde (λ₃) réfléchi par le deuxième filtre dichroïque (162) traverse la gaine optique (12) et se dirige vers le deuxième photodétecteur.

5. Module émetteur-récepteur optique (100) selon l'une des revendications 3 ou 4 dans lequel la première source lumineuse (20), le premier photodétecteur (30), la deuxième source lumineuse (40) ou le deuxième photodétecteur (50) sont disposés dans un même plan.

## Patentansprüche

1. Optisches Sende- und Empfangsmodul (100), das eine erste Lichtquelle (20), einen ersten Fotodetektor (30) und eine optische Multimode-Glasfaser (10) umfasst, wobei die erste Lichtquelle (20) dazu konfiguriert ist, einen ersten Sendestrahl mit einer ersten Wellenlänge (λ₁) auszusenden, wobei die optische Faser (10) einen Kern (11), einen optischen Mantel (12) und eine optische Achse (13) umfasst,
**dadurch gekennzeichnet, dass** die optische Faser Folgendes aufweist:
- eine erste Endoberfläche (14), die im Verhältnis zur optischen Achse der optischen Faser in einem Winkel von 45° geneigt ist und einen Spiegel (141) umfasst,
- eine erste Einkerbung (15), die sich von einer Außenoberfläche (121) des optischen Mantels (12) bis zum Kern der optischen Faser erstreckt und eine erste Fläche (151) aufweist, die einen ersten dichroitischen Filter (152) umfasst, der dazu konfiguriert ist, einen Lichtstrahl mit einer Wellenlänge gleich einer zweiten Wellenlänge (λ₂), die sich von der ersten Wellenlänge (λ₁) unterscheidet, den sogenannten ersten Empfangsstrahl, zu reflektieren,
dadurch, dass die erste Lichtquelle (20) im Verhältnis zum Spiegel (141) so angeordnet sind, dass der von der ersten Lichtquelle ausgesendete erste Sendestrahl den optischen Mantel (12) durchdringt, vom Spiegel (141) reflektiert und in die optische Faser (10) übertragen wird,
und dadurch, dass der erste Fotodetektor (30) und die erste Fläche (151) der ersten Einkerbung (15) im Verhältnis zueinander so positioniert sind, dass der vom ersten dichroitischen Filter (152) reflektierte erste Empfangsstrahl den optischen Mantel (12) durchdringt und sich in Richtung des ersten Fotodetektors bewegt.

2. Optisches Sende- und Empfangsmodul (100) nach Anspruch 1, wobei die optische Faser (10) eine zweite Einkerbung (16) umfasst, die sich von einer Außenoberfläche (121) des optischen Mantels (12) bis zum Kern (11) der optischen Faser erstreckt und eine erste Fläche (161) aufweist, die einen zweiten dichroitischen Filter (162) umfasst, der dazu konfiguriert ist, einen Lichtstrahl mit einer dritten Wellenlänge (λ₃), die sich von der ersten Wellenlänge (λ₁) und der zweiten Wellenlänge (λ₂), unterscheidet, zu reflektieren.

3. Optisches Sende- und Empfangsmodul (100) nach Anspruch 2, das eine zweite Lichtquelle (40) umfasst, die dazu konfiguriert ist, einen Lichtstrahl mit einer dritten Wellenlänge (λ₃), den sogenannten zweiten Sendestrahl, auszusenden, wobei die zweite Lichtquelle (40) und die erste Fläche (161) der zweiten Einkerbung (16) im Verhältnis zueinander so positioniert sind, dass der von der zweiten Lichtquelle (40) ausgesendete zweite Sendestrahl den optischen Mantel (12) durchdringt, vom zweiten dichroitischen Filter (162) reflektiert und in die optische Faser (10) übertragen wird.

4. Optisches Sende- und Empfangsmodul (100) nach Anspruch 2, das einen zweiten Fotodetektor (50) umfasst, der dazu konfiguriert ist, einen Lichtstrahl mit einer dritten Wellenlänge (λ₃) zu detektieren, wobei der zweite Fotodetektor (30) und die erste Fläche (161) der zweiten Einkerbung (16) im Verhältnis zueinander so positioniert sind, dass der vom zweiten dichroitischen Filter (162) reflektierte Lichtstrahl mit der dritten Wellenlänge (λ₃) den optischen Mantel (12) durchdringt und sich in Richtung des zweiten Fotodetektors bewegt.

5. Optisches Sende- und Empfangsmodul (100) nach einem der Ansprüche 3 oder 4, wobei die erste Lichtquelle (20), der erste Fotodetektor (30), die zweite Lichtquelle (40) oder der zweite Fotodetektor (50) in derselben Ebene angeordnet sind.

## Claims

1. Optical transceiver module (100) comprising a first light source (20), a first photodetector (30) and a glass multimode optical fibre (10), the first light source (20) being configured to emit a first emission beam at a first wavelength (λ₁), the optical fibre (10) comprising a core (11), an optical cladding (12), an optical axis (13),
**characterised in that** the optical fibre has:
- a first end surface (14), inclined at an angle of 45° with respect to the optical axis of the optical fibre, comprising a mirror (141),
- a first notch (15), extending from an outer surface (121) of the optical cladding (12) to the core of the optical fibre, and having a first face (151) comprising a first dichroic filter (152) configured to reflect a light beam of wavelength equal to a second wavelength (λ₂), distinct from the first wavelength (λ₁), called first reception beam,
**in that** the first light source (20) is arranged relative to the mirror (141) in such a way that the first emission beam emitted by said first light source passes through the optical cladding (12), is reflected by the mirror (141) and is transmitted into the optical fibre (10),
and **in that** the first photodetector (30) and the first face (151) of the first notch (15) are positioned one with respect to the other in such a way that the first reception beam reflected by the first dichroic filter (152) passes through the optical cladding (12) and is directed to the first photodetector.

2. Optical transceiver module (100) according to claim 1, wherein the optical fibre (10) comprises a second notch (16), extending from an outer surface (121) of the optical cladding (12) to the core (11) of the optical fibre, and having a first face (161) comprising a second dichroic filter (162) configured to reflect a light beam at a third wavelength (λ₃), distinct from the first wavelength (λ₁) and the second wavelength (λ₂).

3. Optical transceiver module (100) according to claim 2 comprising a second light source (40) configured to emit a light beam at a third wavelength (λ₃), called second emission beam, the second light source (40) and the first face (161) of the second notch (16) are positioned one with respect to the other in such a way that the second emission beam emitted by the second light source (40) passes through the optical cladding (12), is reflected by the second dichroic filter (162) and is transmitted into the optical fibre (10).

4. Optical transceiver module (100) according to claim 2 comprising a second photodetector (50) configured to detect a light beam at a third wavelength (λ₃), the second photodetector (30) and the first face (161) of the second notch (16) are positioned one with respect to the other in such a way that the light beam at the third wavelength (λ₃) reflected by the second dichroic filter (162) passes through the optical cladding (12) and is directed to the second photodetector.

5. Optical transceiver module (100) according to one of claims 3 or 4 wherein the first light source (20), the first photodetector (30), the second light source (40) or the second photodetector (50) are arranged in a same plane.
